# EUROPEAN PATENT APPLICATION

(11) **EP 0 973 105 A2**
(43) Date of publication of application: **19.01.2000**
(21) Application number: 99303802.5
(22) Date of filing: 17.05.1999
(51) Int. Cl.: G06F 17/30

(54) **Document management system with link function and document management method**

(30) Priority: 18.05.1998 JP 13499498
(71) Applicant: Matsushita Electric Industrial Co., Ltd., Kadoma-shi, Osaka 571 (JP)
(72) Inventor: Hirose, Atsushi, Sanda-shi, Hyogo-ken (JP)
(74) Representative: Barnfather, Karl Jon, Dr.

(57) **Abstract**

The present invention relates to a document management system having an inter-page-linking function and a document management method. When the document display means displays the pages of first and second documents, a specific imag e corresponding to the first page is dragged and dropped at a position on the se cond page, where the link button creating means creates link buttons with the se cond page as the linkage source and the first page as the linkage destination. A link button management means controls the attribute information about the link button thus created, which will be used to display the linkage source page and t he linkage destination page.

## Description

The present invention relates to a document management system and more particularly to a document management system having an inter-page-linking function and a document management method.

As the documents handled by computer have increased in volume and diversified, the document management method has come to be reflected in the efficiency of document search and retrieval in a greater measure. The World Wide Web (WWW) which now becomes popular in a short period makes it possible to search worldwide home pages one after another by hyperlinking mutually. This convenience has now been appreciated by many people. Even some of the ordinary document image management systems are also provided with this hyperlink function. Although the hyperlink function is very convenient in browsing and searching for documents, it remains the problem that it is troublesome to set up a hyperlink.

The link function incorporated in the Microsoft software " Office" requires a plurality of steps in the setting of a hyperlink which are to put a mark on a linkage destination page, to prepare a link mark on a linkage source page and to designate that link mark to link the mark on the linkage destination page.

According to another example disclosed in the Japanese patent laid-open publication No. 4-65756, a link is set up by specifying each of two or more documents to be linked together. In that method, the document being edited is displayed simultaneously with a document controlled by a document management means or an icon corresponding to the region for the document. First, one document is specified (by the icon for one document or its region). Then, the other document is specified in the same way. Therefore the link is set up between the two documents or the regions for them.

The Japanese patent laid-open publication No. 9-44499 discloses a simplified method of setting up an inter-page link According to that invention all the object details for link do not have to be worked out. Instead, part of them or a dummy page icon representing all the object details is prepared and placed on a "multipoint structure branch."

As set forth above, all the conventional document management systems provided with a hyperlink function had the disadvantage that the setting of a hyperlink was troublesome.

That is, in the method disclosed in the Japanese patent laid-open publication No. 4-65756, it is necessary to specify at least two objects - documents, document icons or region icons.

In the method disclosed in the Japanese patent laid-open publication No. 9-44499, too, the user is required to take troublesome procedures including creation of a dummy page icon and the linking of the dummy page icon and a page icon.

The present invention is proposed in consideration of those problems with the conventional hyperlink methods. That is, it is an object of the present invention to provide a system and method of managing documents that facilitate the setting of a hyperlink.

The object is achieved by using the following means. The present invention is a document management system which comprises a document management means 1 for controlling electronic documents stored in a storage means and a document display means 2 for displaying an object document when information to specify the electronic document is inputted thereinto.

In the aforesaid document management system a link button is created as follows. When the document display means displays the pages of first and second documents, a specific image corresponding to the first page is dragged and dropped at a position on the second page, where the link button creating means creates link buttons with the second page as the linkage source and the first page as the linkage destination. It is defined here that the term " first page" means an arbitrary page of the pages composing a document or file, and the term "second page" means an arbitrary page of the pages composing another document or file.

A link button management means controls the attribute information about the link button thus created, which will be used to display the linkage source page and the linkage destination page.

The specific image corresponding to the first page as mentioned above may be the first page itself or an icon representing the first page.

When the link buttons are under the control as above and the document display means displays a specific page as a linkage source page, and the link button display means refers to the information controlled by the link button management means and displays the aforesaid link button over that page. After the link buttons are displayed that way, the user specifies one of the link buttons displayed on a specific page as the linkage source. And a linkage destination page display control means refers to the information controlled by the link button management means and the document management means, then displays the linkage destination page linked to that link button.

The above description indicates merely to create a link between the two pages by link buttons. This principle is applicable to the setting of a link between pages in link groups.

That works this way. When a link group management means controls link groups which are composed of a plurality of mutually linked pages respectivly, the user selects a specific link group. And then, a page series displays control means is activated, refers to the information controlled by the link group management means and the document management means, and instructs the document display means to display all the pages belonging to the link group.

According to the instruction, the document display means displays the first pages belonging to the first link group and the second pages belonging to the second link group. Then, if a specific image corresponding to a first page is dragged and dropped at a specific place in a second page, the link button creating means sets up a link button at that specific position with the first page as the linkage destination and the second as linkage source.

The link button management means controls the attribute information about the link button thus created, so that the linkage source page, the linkage destination page and the link groups belonging to those pages may be displayed.

That is, when the document display means displays a specific page as the linkage source page, the link button display means refers to the information controlled by the link button management means and displays the aforesaid created link button over that page.

According to the setting as above, one of the link buttons displayed on the specific page as the linkage source is specified, then the linkage destination display control means refers to the information controlled by the link button management means and instructs the document display means to display the page at the linkage destination linked to the link button and all the other pages at the linkage destination belonging to the same link group.

Fig 1 is a block diagram of a system as the first embodiment of the present invention.

Fig. 2 is a block diagram of a system as the second embodiment of the present invention.

Fig 3 is a conceptual diagram of a screen image in setting up a link button in the first embodiment.

Fig 4 is a conceptual diagram of a screen image in setting up a link button in the second embodiment.

Fig 5 is a conceptual diagram of a document control table used in embodiments of the present invention.

Fig 6 is a conceptual diagram of a link button control table used in the first embodiment.

Fig 7 is a conceptual diagram of a link button control table used in the second embodiment.

Fig 8 is a conceptual diagram of a link group control table used in the second embodiment.

Fig 9 is a flow diagram of an operation of the first embodiment of the present invention.

Fig 10 is a flow diagram of an operation of the second embodiment of the present invention.

Fig 11 is a functional block diagram showing an arrangement for setting up a link group.

Fig 12 is a flow diagram showing the process of setting up a link group.

Fig 13 is a conceptual diagram of a label table.

Fig 14 is a conceptual diagram of a label bundle table.

Fig 15 is a conceptual diagram showing all the management documents on the document control table are displayed in a lump.

Fig 16 is a conceptual diagram showing a screen image in setting up a link group.

Fig 17 is a conceptual diagram showing a screen image in setting up a link group.

Fig 18 is a conceptual diagram of an enlarged display of a specific page in a document, a series of which is displayed in a lump.

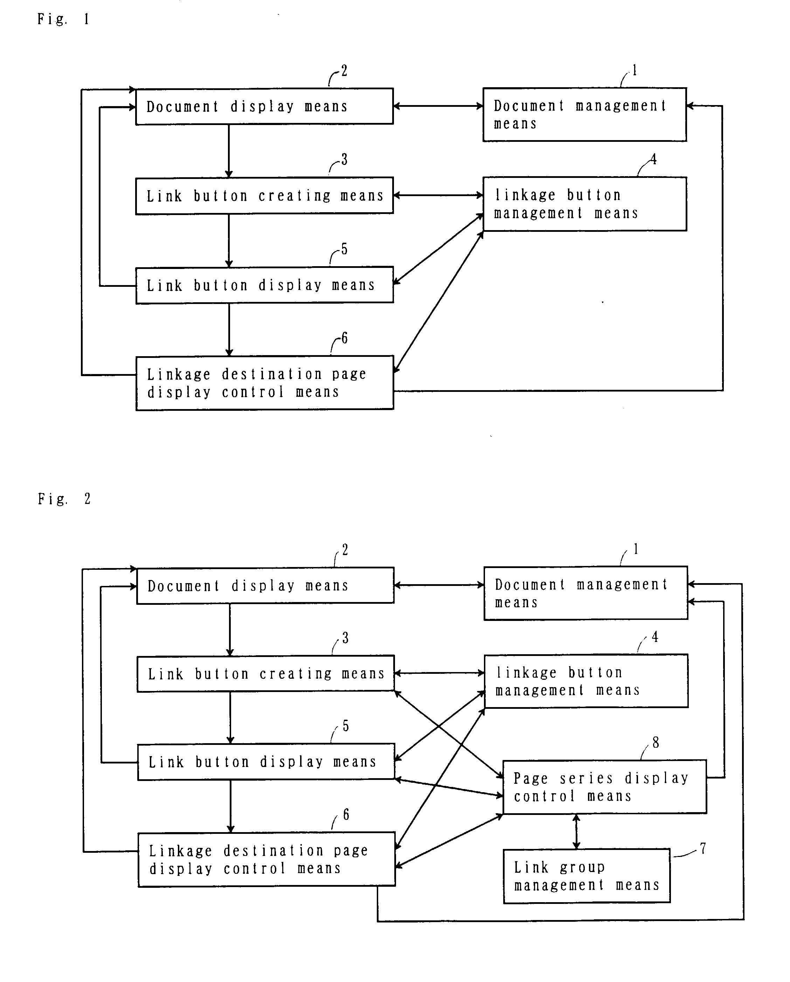

Now, there will be described the embodiments of the present invention with reference to Figs. 1 to 10.

### Embodiment 1

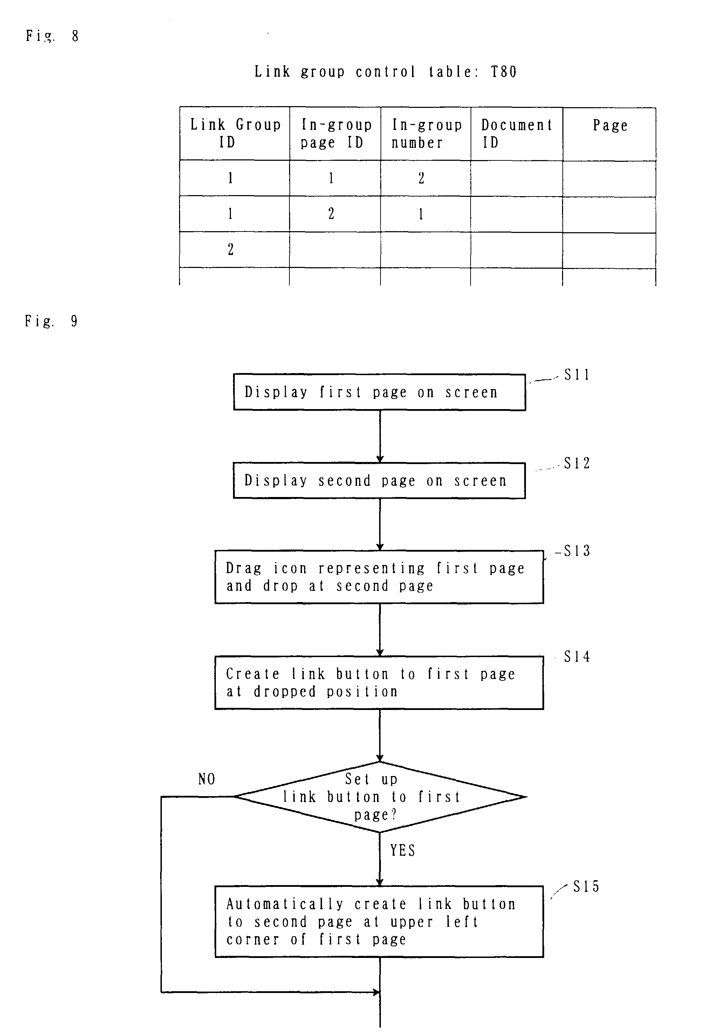

Fig 1 is a block diagram of a document management system provided with an inter-page linking function as the first embodiment of the present invention, and Fig 9 is a flow diagram showing its operational flow.

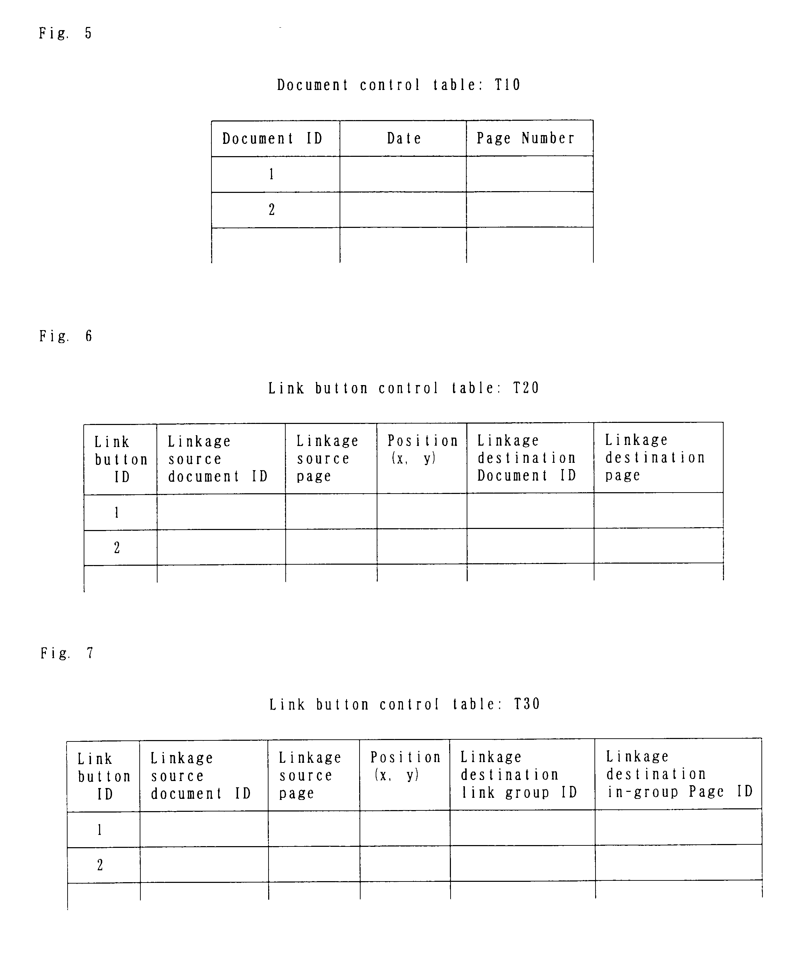

It is assumed that one or more electronic documents are stored in a storage means such as a hard disk (not shown), and each electronic document is controlled by a document management means 1 as shown in Fig. 1. In other words, the document management means 1 registers and controls the information such as document ID to specify a document and other necessary attributes such as the date of registration on this document file and page numbers, on a document control table T10, as shown in Fig. 5.

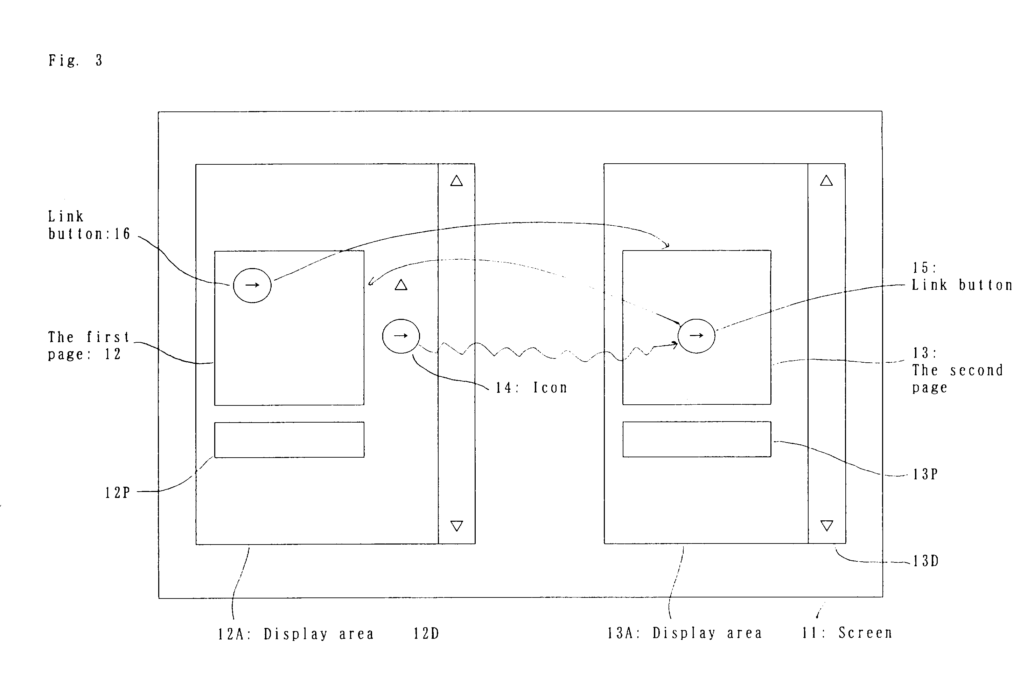

A specific page in each of specific two of the electronic documents controlled by the document management means 1 is possible to display in a page display area on a display screen 11 as shown in Fig 3 as instructed by the user. That is to say, the document display means 2 displays a specific page 12 (first page) of a specific document in the first page display area 12A on the screen 11 according to the user's instruction (Step S11). Likewise, a second page 13 is displayed in the second display area 13A on the screen 11 (Step S12). The second page 13 is generally a specific page in a document other than the document containing the first page, but may be a specific page in the same document as that of the first page.

The method of displaying those two pages is not restricted in particular. In this embodiment, however, when the documents controlled by the document management means are specified and displayed per document, the whole pages of a document are displayed as a continuous unit, so that the whole pages of the document can be viewed by using a scroll bar 12D or 13D provided in the display areas 12A or 13A On the other hand, when a specific document is specified and displayed page by page, the whole pages of the document can be seen by using a scroll bar 12P or 13P provided with a function of turning the pages. Another feature of the present embodiment is that an icon representing the page (particularly the first page) is created and then displayed at the same time that the page is displyed.

When two pages are displayed that way, the first page 12 or an icon 14 representing that page is dragged and dropped at a specific position on the second page 13, and the link button creating means 3 is activated and creates at that position a link button 15 toward the first page 12 (Steps S13 to S14).

If the user directs here, the link button creating means 3 will automatically create at a specific position of the first page 12 (at the upper left, for example) a link button 16 toward the second page 13 after the creation of the link button 15 (Step S15). That is, as defined herein, the link button 16 is a button generally called "return button", and is for prompt return to the original page (in this case, the second page). Without the definition of this "return button", however, the software is so configured as to make it easy to return to the original page.

The attributes on the link buttons 15, 16 created above are registered on a link button control table T20 as shown in Fig 6 and controlled by the link button management means 4. As used in Fig 6, the terms " linkage source" and " linkage destination" are terms relative to each other with a link button as a source. In Fig 3, for example, if the link button 15 is the source, then the second page will be the linkage source and the first page the linkage destination If the link button 16 is the source, then the first page will be the linkage source and the second page the linkage destination. Under this arrangement, the link button management means 4 controls the attributes of the respective link buttons such as the document ID to specify the document of the linkage source, page number in the linkage source document, position of the link button on the linkage source page, document ID to specify the linkage destination document and page number in the linkage destination document.

When the link connection between two pages to be linked to each other (in this example, between the first page 12 and the second page 13) is defined as above, if the document display means 2 displays one of the pages according to instructions from the user, the link button display means 5 refers to the link button control table T20 and displays the link button at the position on the displayed page controlled by the link button management means 4.

If the link button thus displayed in that state is clicked with the cursor, the linkage destination page display control means 6 refers to the link button control table T20 to obtain the linkage destination document ID and the linkage destination page. This information is handed to the document display means 2, which then refers to the information controlled by the document control means 1 and displays the corresponding page. For example, when the second page 13 is displayed with a link button 15 at a specific position on that page, if the link button 15 is clicked, the first page 12 linked thereto will be displayed. On the contrary, when the first page 12 and a link button 16 aredisplayed at the same time, if this link button 16 is specified, the second page 13 will be displayed.

As set forth above, the present embodiment makes it possible to create a hyperlink from a page to another in an operation of merely dragging and dropping with the mouse. Furthermore, a link from the linkage destination page to the linkage source page is set up at the same time if so instructed by the user. This way, the two-way hyperlink can be effected in a single operation.

### Embodiment 2

Fig 2 is a block diagram showing a system provided with a function of setting up a link between groups as second embodiment of the present invention. What is different from the first embodiment shown in Fig 1 is that the second embodiment is provided with a link group management means 7 and a page series display control means 8.

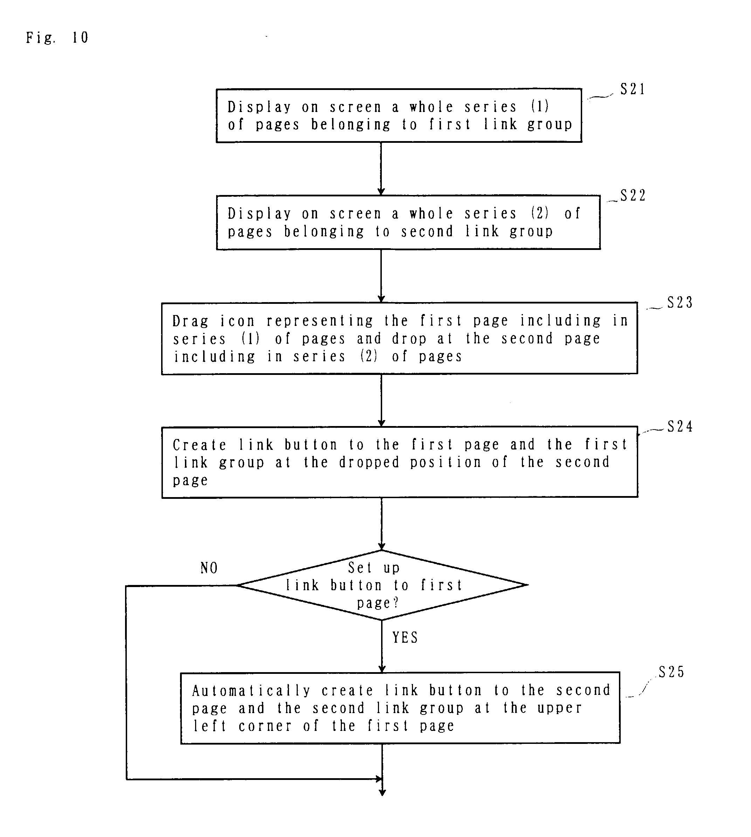

There will now be explained the operation of this embodiment with the description limited to what is different from the first embodiment with reference to Fig 10.

First, a first link group is created by linking one specific document to another or from one specific page in a specific document to another in the same or another document. That link group is made up of documents with interrelationship or pages making up those documents. Various ways of that group formation are conceivable. These include the method described in the Japanese patent application No. 10-016968 filed by the applicants of the present invention, the method described in detail later.

As a link group is created, the link group management means 7 registers the attributes about the link group on a link group control table T80 as shown in Fig 8 and controls them The information to be registered with the link group control table T80 are the link group ID to specify a link group, in-group page ID to specify a page within a group, in-group number to show the number within a group, a document ID to specify the document to which the page belongs and the page within the document. In the same way, a second link group is created, and its attributes are registered on the link group control table T80.

A plurality of link groups are created as described above, and attributes corresponding to the link groups is registered on the link group control table T80 that way. And if the user requests to display a specific group, the page series display control means 8 refers to the link group control table T80 and extracts the document ID of the document belonging to the specified group and the corresponding page, which are transferred to the document display means 2. After obtaining the information to be displayed from the document management means 1, the document display means 2 displays all the specific pages belonging to the specified group. The specific link group can be specified in various ways. As an example, there will be explained later the method disclosed in the Japanese patent application No. 10-016968 .

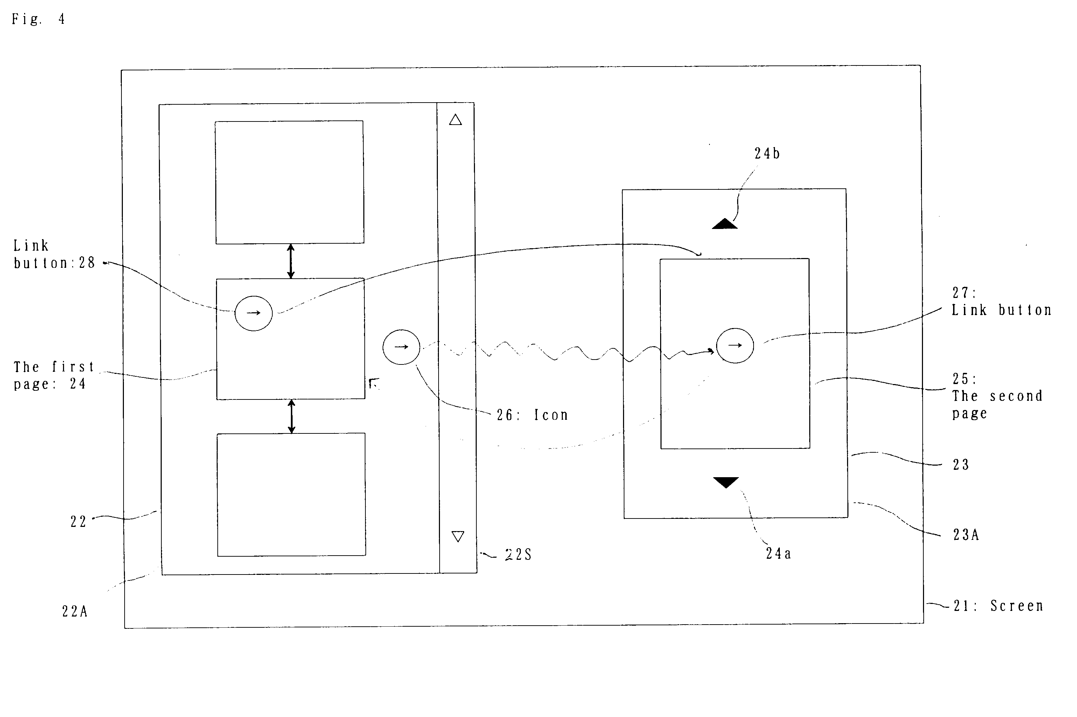

A whole series 22 of pages belonging to the first link group is displayed in a display area 22A on the screen 21 as shown in Fig 4. The same way, a whole series 23 of pages belonging to a second link group is displayed in a display area 23A on the screen 21 (Steps S21 to S22).

It is noted that the display area 22A can display other pages belonging to the same group by using the scroll bar 22S as shown in Fig 4. The display area 23A, too, can display the other pages belonging to the same group by using the scroll keys 24a, 24b. As described hereinafter, regarding a specific page of the second link group which becomes a linkage source, a position of a link button has to be defined within said page. Owing to it, the document belonging to the first link group is displayed on a reduced scale while the a specific page of a document belonging to the second link group is displayed enlarged. Needless to way, the document belonging to the first link group and the document belonging to the second link group may be displayed on the same scale. As will be described below, it is also possible to display an icon to represent a specific page.

Here, the link button creating means 3 creates a link button in the following procedure. That is, the first step is to drag the first page 24 contained in the whole series 22 of pages belonging to the first link group or an icon 26 representing that, and drop it at a specific position on the second page 25 contained in the whole series 23 of pages belonging to the second link group. Then, a link button 27 toward the first page 24 and the first link group is set up at the position where the icon 26 for the second page 25 was dropped (Steps S23 to S24). Then, the link button creating means 3 automatically creates a link button 28 toward the second page 25 and the second link group at a specific position, for example, at the upper left if the user so instructs then (Step S25). This link button 28, which is called "return button" in the first embodiment of this invention, may be set up as necessary.

The link button 27 (and 28) thus set up is controlled by the link button management means 4, which registers the following attributes on a link button control table T30 as shown in Fig 7; the link button ID to specify the link button, linkage source document ID to specify the linkage destination document, page number in the linkage source document, position of the link button on the linkage source page, linkage destination link group ID to specify the link group of the linkage destination and in-group page ID at the linkage destination to specify a page in the link group at the linkage destination As used herein, the terms " linkage source" and " linkage destination" are defined the same way as in the first embodiment.

Under that setting when the user gives a command to display a specific link group, the page series display control means 8 and the document display means 2 are activated and displays a page belonging to the link group specified, for example, at the display area 23A on the screen 21. Then, the link button display means 5 refers to the link button control table T30 and displays a link button (link button 27) together with the name of the link group at the linkage destination If the displayed link button is clicked, the page linked thereto, the first page 24 belonging to the first link group, for example, will be displayed in the area 22A on the screen 21 along with a whole series of the other pages belonging to the link group linked.

Under the arrangements just described, it is possible to establish a two-way hyperlink between the pages composing link groups in a single operation And at the same time that the linkage destination page is displayed, the other pages in the same group to which the linkage destination page belongs are displayed. Therefore, it becames easy to view the other pages, and it is possible for the present invention to be available widely.

In the aforesaid operation, furthermore, it is possible to know the group name at the linkage destination before being displayed, because the link group name at the linkage destination is shown on the link button.

### (Description of Japanese patent application No. 10-016968)

The link group described in the second embodiment may be created and displayed in any method as mentioned above, but the efficient method is disclosed in the Japanese patent application No. 10-016968 filed by the applicant of this invention, which will now be described briefly.

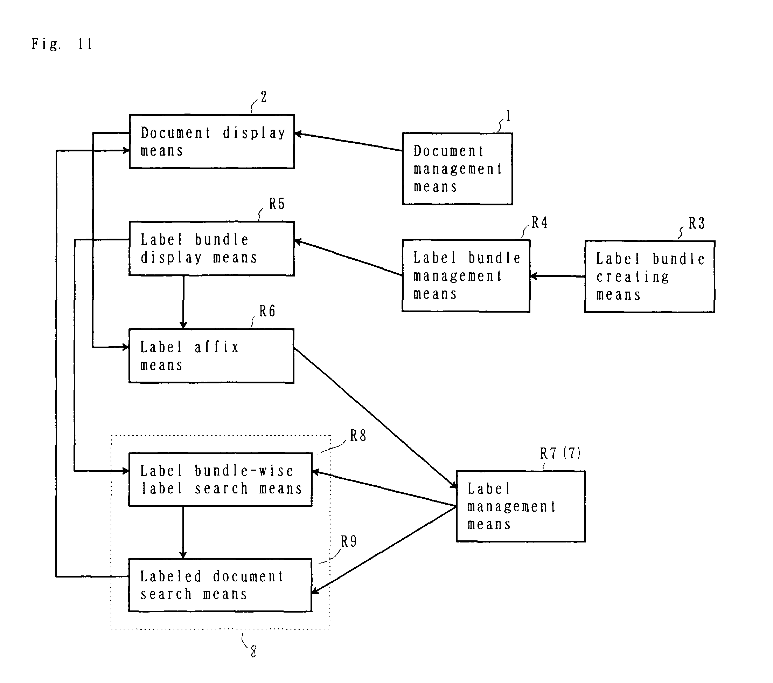

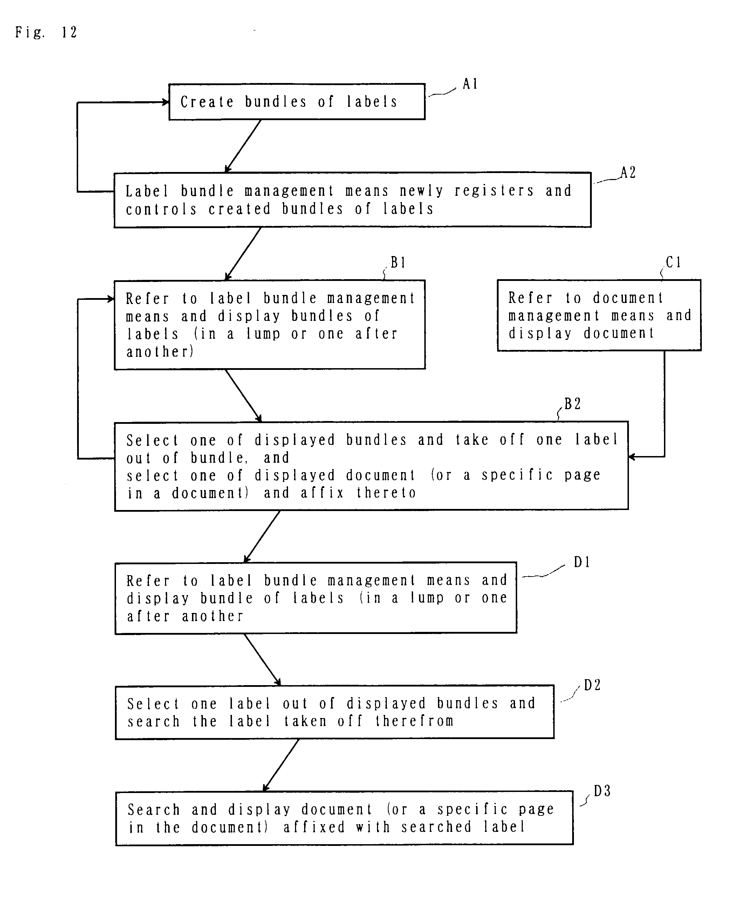

Fig 11 is a block diagram of a document management system utilizing labels or tags in the first embodiment of the present invention, while Fig. 12 is a flow diagram showing the process thereof. In principle, labels of the same kind (same color or name) are affixed together to create a link group. That arrangement is now explained hereinafter along with the operating procedure.

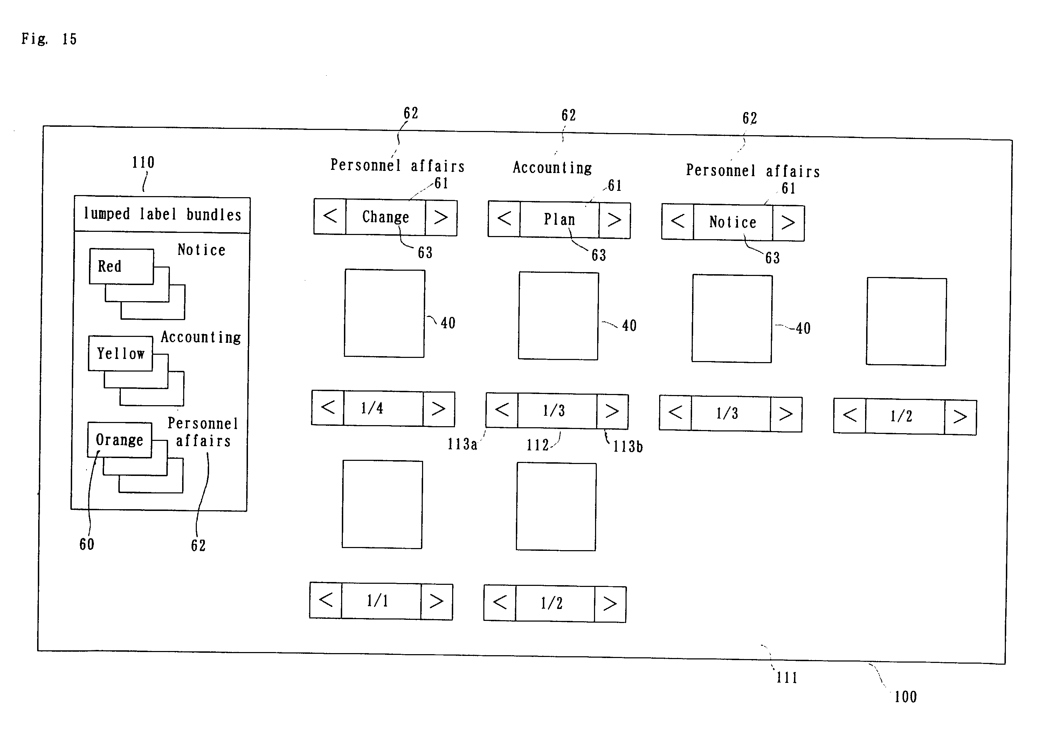

As mentioned, a plurality of electronic documents are filed in a storage means (not shown) such as a hard disk and controlled by the document management means 1 as shown in Fig 11 (the same document management means 1 as shown in Fig 1). That is, as mentioned above, the document management means 1 registers and controls the document ID to specify the documents and necessary attributes on the document control table T10 as shown in Fig 5. According to the user's instruction, the electronic documents controlled by the document management means 1 can be displayed by the document display means 2 in a document series display field 111 on a display screen 100 as shown in Fig 15.

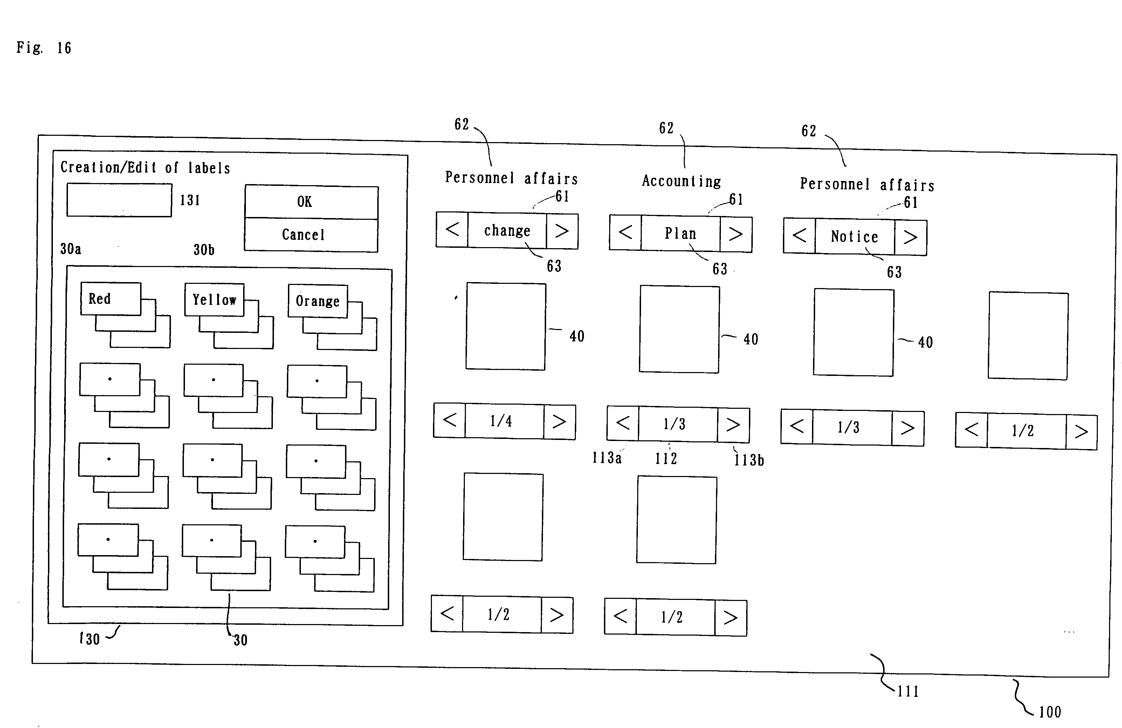

A label bundle creating means R3 creates bundles of labels in the following way. A label bundle preparation frame 130 as shown in Fig 16 is first displayed on the display screen according to the user's instruction (of selecting " Label Bundle Creation" at the menu page or "New" key displayed at a corner of the screen). Of the many strip-formed color samples 30a, 30b..., a suitable color strip is picked up.

Therefore, the user can select a specific color strip and to input a suitable name, for example, a name according to the category, as necessary, in a frame 131 at one upper corner. In the above example, the color is an attribute of the label bundle. If the name is given, the color and the name will be attributes of the label bundle (Fig 12, Step A1).

The label bundle prepared by the label bundle creating means R3 is registered as in Fig 14 and controlled by the label bundle management means R4. That is, each bundle of labels is given a label bundle ID to specify the bundle of labels and controlled by registering on the label bundle table T40 together with the color and name as attributes of the label bundle (Step A2).

The label bundle display means R5 displays bundles of labels 60 in a lump, said bundles of labels 60 is controlled by the label bundles management means R4, in a label bundle display field 110 on the display screen 100 as shown in Fig 15. Accordingly, the user can select a bundle of labels 60 (Step B1). The display is made according to the attributes of the bundle of labels 60, that is, color, name or a combination of them To display " in a lump" means to set all the searched bundles of labels 60 on a plane, and includes a case that the user can update the display contents by using the scroll bar (not shown).

Meanwhile, the document display means 2 refers to the information controlled by the document management means 1 as mentioned above and displays documents 40 in a lump in a document series display field 111 so as to enable the user to select a document (Step C1). Labels 61 on the three frames displayed upper-leftside in the document series display field 111 displays only the documents affixed with labeles. The processing of affixing labels is described below.

As used herein, the terms "document series display" denotes an arrangement to display all the searched documents in a lump on a plane, and also the case that, if the available display frame is too small, the user can update the contents of the display frame by cliking the increment key or the decrement key on the scrool bar (not shown).

When the label bundle display means R5 displays bundles of labels 60 or the document display means 2 displays the documents 40 on the display screen 100, the label affix means R6 enables the user to specify a specific bundle of labels 60, take off a label 61 from the bundle of labels 60 and affix the label 61 on a specific document 40 displayed by the document display means 2.

That label affix processing involves selecting and affixing labels of the same color (or name) out of the documents belonging to the same category. Therefore, that affix processing permits grouping as described in the second embodiment.

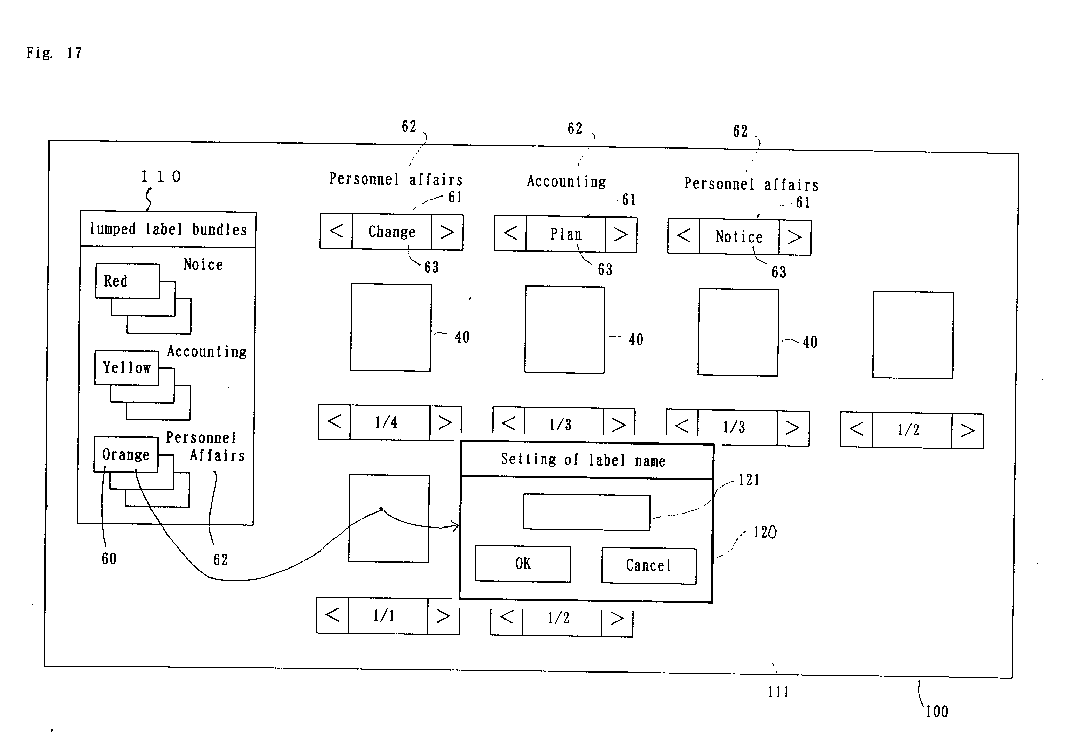

It is possible to practice various method of label affixing one of which is described with reference to Fig 17. Of a plural bundles of lables displayed by the label bundle display means R5, a specific bundle of lables 60 is specified with the cursor and affixed to an object document 40 by the drag-and-drop method. Then, a hop-up window 120 is displayed with a label name input frame 121 where the label name can be entered.

As described, if a label 61 taken off from a specific bundle of labels 60 is affixed to one of the displayed documents 40, the attributes (bundle of labels 60, document 40) of the affixed label 61 will be newly registered and kept on a label table T70 controlled by a label management means R7 which will be described below (Step B2).

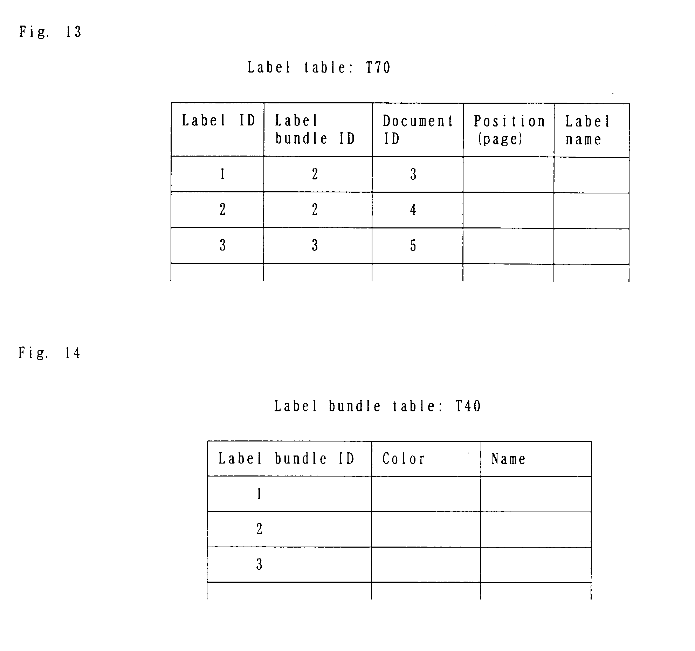

The label management means R7 registers on the label table T70 the information on the label 61 affixed to the document 40 and controls the information As shown in Fig 13, the information includes the label ID, label bundle ID, document ID of the document 40 with the label affixed to it, and, as necessary, the position (page) where the label 61 is affixed and label name.

The label table T70 corresponds to the link group control table T80 described in the second embodiment. Since the link groups can be indicated by the kind of label bundle (color, name), the link group ID of the label table T70 corresponds to the label bundle ID of the link group control table T80. The label ID to specify the label in the label table T70 corresponds to the in-group page ID in the link group control table T80. The label name corresponds to the group name described in the second embodiment. It is also evident that the label management means R7 corresponds to the link group management means 7 described in the second embodiment.

The document 40 to which the label 61 is affixed as explained can be searched by label bundle-wise label search means R8 in the following way. The label bundle display means R5 refers to the label bundle management means R4 and displays on the label bundle display field 110 the created bundle of labels 60 as shown in Fig 15 (Step D1).

The user then clicks the "search" key (not shown) for search of a document. That is, if the user selects one of the bundles of labels 60 displayed as described above (by specifying with the cursor) then the label bundle-wise lable search means R8 refers to the information (in this case, the label bundle ID) controlled by the label management means R7, searches all labels 61 taken off from the selected (specified) bundle of labels 60 and hands over the results to a labeled document search means R9 (Step D2).

Receiving the search results from the label bundle-wise label search means R8, the labeled document search means R9 searches the document 40 affixed with the label 61 searched by the label bundle-wise label search means R8. The search by the labeled document search means R9 is done with reference to the label table T70 controlled by the label management means R7 as shown in Fig 13 (Step D3). The results are forwarded to the document display means 2 and displayed on the document series display field 111 of the screen.

The searched and displayed document belonging to a specific group is indicated on the display areas 22A, 23A as shown in Fig. 4. That is, the document series display field 111 is provided with two display areas 22A, 23A where the documents belonging to specific groups are displayed. Thus, the page series display control means 8 described in the second embodiment works as the label bundle-wise label search means R8 and the labeled document search means R9. In Fig 4, the specific pages of the respective documents are displayed, which will be explained hereinafter.

The label management means R7 (link group management means 7) can control the following information as attributes of the label 61: the bundle of labels 60 from which the label 61 is taken off, the document 40 affixed with the label 61 and also the page at which the label is affixed. That enables the labeled document search means R9 to search the affixed page, too, when searching the document affixed with the label 61. It can be further so arranged that referring to its information, the document display means 2 is able to display the page affixed with the label 61.

There will now be described the operation in which such an arrangement is made.

The first step in the process of affixing a label (Step B2) is to open the object page in the document 40 to be affixed. In the example shown in Fig. 15, the operation is executed by keys 113a, 113b (<: turns pages backward, >: turns pages forward) on the both sides of the page display frame 112 appearing below each document 40. Needless to way, any method other than this may be used.

Under that setting it is possible to take a label 61 from the bundle of labels 60 and affix the label 61 to a specific page of a specific document 40 as described above. When the affixing of the label 61 is completed (by clicking the OK key in the pop-up window in Fig 17), the specified page information will be controlled together with the bundle of labels 60 thus taken off and the affixed document 40 by the label management means R7 (link group management means 7).

Then in the processing of the document search (Step D3), the document 40 is searched which is affixed with the label 61 found in the label search (Step D2). The documents searched that way are displayed in a lump by the document display means 2. If a specific document is specified from a plural documents thus displayed in a lump and the enlarged display of the specific document is instructed by double-click of the left button of the mouse, the document display means 2 refers to the page information (controlled by the label management means R7) specified in the above label affexing step and searches and displays the pages of the labels affixed to the documents.

It is so configured that the labels 61 affixed to the document are all displayed along with the corresponding page numbers Po near the enlarged display of the document and that the label 61 corresponding to the page now on display is displayed by highlighting so that the label 61 can be visually recognized. When in order to change displayed pages the aforesaid key 113a or key 113b is clicked, the highlighted label 61 is switched to another.

### (Supplementary description of the relation between the first and second descriptions and the patent application No. 10-016968)

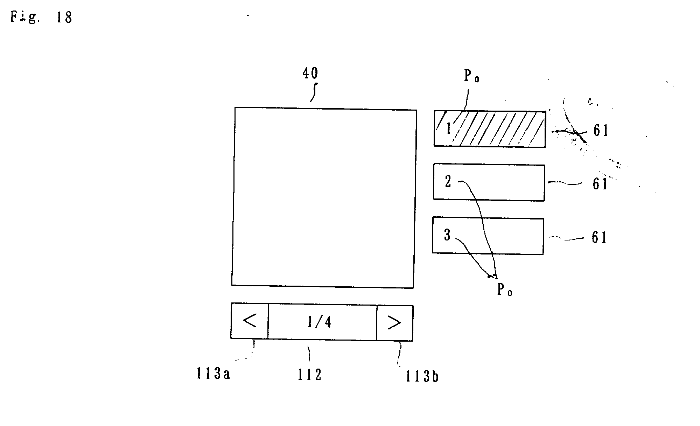

There will now be described other relations between the first and second embodiments and the Japanese patent application No. 10-016968 except the above description The document series display shown in Fig 3 is equivalent to the document series display shown in Figs. 15 and 16 which are presented in the description of the patent application No. 10-016968. But there is a difference in Fig 3 from others that series of documents are shown in two areas 12A and 13A respectively. It is also pointed out that the page scroll bars 12P, 13P in Fig. 3 correspond to the keys 113a, 113b in Figs. 15 and 16. The enlarged display in the display area 23A in Fig 4 corresponds to the enlarged display shown in Fig 18. In Fig 4, however, labels affixed to pages and the page numbers are not displayed.

As set forth above, the present invention makes it possible to create a hyperlink from a page to another merely by a drag and drop operation with the mouse. If the user requests, a link from the linkage destination page toward the linkage source page is created at the same time. Therefore, a two-way hyperlink can be set up in a single operation Furthermore, a two-way hyperlink between link groups can be established in a single drag and drop operation in stead of creating by linking pages one and another.

The above-mentioned two embodiments can be executed by a CPU and a program to start up the same. The programs is assumed to be written in a portable recording medium and a fixed recording medium such as a hard disk.

## Claims

1. A document management system provided with a document management means controlling electronic documents stored in a storage means and a document display means displaying an object document by inputting information to specify the electronic document, said system comprising:
a link button creating means, on said document display means displaying the first and second pages, dragging a specific image corresponding to the first page, dropping at a position on the second page, and then creating a link button with said second page as linkage source and the first page as linkage destination at said position; and
a link button management means controlling the attribute information about the link button thus created and putting said information to use for displaying a linkage source page and linkage destination page.

2. The document management system as defined in claim 1, wherein said image corresponding to said first page is the first page itself or an icon representing the first page.

3. The document management system as defined in claim 1 or claim 2, further comprising:
said link button display means, on the document display means displaying a specific page as a linkage source page, referring to the information controlled by the link button management means and displaying said link button over that page; and
a linkage destination page display control means, according to designating one of the link buttons on the specific page displayed as the linkage source, referring to information controlled by the link button management means and the document management means, and instructing the document display means to display the linkage destination page linked to said link buttons.

4. The document management system as defined in claim 1, claim 2 or claim 3, wherein said link button management means controls at least the linkage destination pages, linkage source pages and positions of link buttons at pages as attribute information about link buttons, so that said link button display means and linkage destination page display control means may refer to said information in case of displaying a link button and a linkage destination page.

5. The document management system as defined in claim 1 or claim 2, wherein said link button creating means sets up a link button to the linkage source page at a specific position on the linkage destination page at the same time that a link button is created at a specific position on the linkage source page.

6. A document management system provided with a document management means controlling electronic documents stored in a storage means and a document display means displaying an object document by inputting information to specify the electronic document, said system comprising:
a link group management means controlling as one group a plurality of pages linked to each other;
a page series display control means, according to an user's selection of a specific link group, referring to the information controlled by said link group management means and said document management means, and instructing the document display means to display a whole series of pages belonging to said link group;
a link button creating means, on said document display means displaying the first and second pages, dragging a specific image corresponding to the first page, dropping at a specific position on the second page, and then creating a link button with said second page as linkage source and the first page as linkage destination at said specific position, said first page belonging to the first link group and said second page belonging to the second link group; and
a link button management means controlling the attribute information about the link buttons thus created and puts said information to use for displaying the linkage source pages, linkage destination pages and link groups to which said pages belong.

7. The document management system as defined in claim 6, wherein the specific image corresponding to said first page is the first page itself or an icon representing the first page.

8. The document management system as defined in claim 6 or claim 7, further comprising:
a link button display means, on the document display means displaying a specific page as a linkage source page, referring to the information controlled by the link button management means and displaying said created link button over said page; and
a linkage destination display control means, according to designating one of the link buttons on a specific page displayed as the linkage source, referring to the information controlled by the link button management means and instructing the document display means to display the linkage destination page linked to said specific page and a whole series of the other pages belonging to the same link group.

9. The document management system as defined in claim 6, claim 7 or claim 8, wherein, as the attribute information on the link button, the link button management means controls the information including at least the linkage destination pages, link group, linkage source pages and link button positions on that page.

10. The document management system as defined in claim 8, wherein the link button display means displays the linked page and the link group at the same that a link button is displayed.

11. The document management system as defined in claim 6 or claim 7, wherein the link button creating means sets up a link button to the linkage source page at a specific position on the linkage destination page at the same time that a link button is created at a specific position on the linkage source page.

12. A a document management method controlling electronic documents stored in a storage means by a document management means and displaying an object document on a document display means by inputting information to specify the electronic document, said method comprising the steps of:
displaying the first page and the second page by said document display means; and
creating a link button with said second page as linkage source and the first page as linkage destination by dragging and dropping a specific image corresponding to the first-document page at a position on the second page.

13. The document management method as defined in claim 12, which comprises the steps of:
displaying a link button wherein, when the document display means displays a specific page as a linkage source page, said created link button is displayed over that page; and
displaying a linkage destination page wherein, according to designating one of the link buttons on the specific page displayed as the linkage source, a linkage destination page linked to the link button is displayed on the document display means.

14. A document management method controlling electronic documents stored in a storage means and displaying an object document on a document display means by inputting information to specify the electronic document, said method comprising the steps of:
displaying a link group wherein, when a link group management means controls a plurality of mutually linked pages as one group, the first page belonging to the first link group and the second page belonging to the second link group are displayed according to the instructions from the user; and
creating a link button with said second page as linkage source and the first page as linkage destination by dragging and dropping a specific image corresponding to the first page at a position on the second page.

15. The document management method as defined in claim 13 or claim 14, which comprises the steps of:
displaying a link button wherein, when the document display means displays a specific page as linkage source page, said link button created on that page is displayed over that page; and
displaying a series of pages wherein, according to the selection of one of the link buttons on a specific page displayed as a linkage source, the document display means displays the linkage destination page linked to said link button and other pages of a link group to which said page belongs.
